# EUROPEAN PATENT APPLICATION

(11) **EP 2 131 058 A1**
(43) Date of publication of application: **09.12.2009**
(21) Application number: 08739837.6
(22) Date of filing: 28.03.2008
(51) Int. Cl.: F16F 1/12, B60T 13/52

(54) **VIBRATION ISOLATION MECHANISM FOR COIL SPRING AND BOOSTER USING THE SAME**

(30) Priority: 29.03.2007 JP 2007087138
(71) Applicant: Bosch Corporation, Shibuya-ku Tokyo 150-8360 (JP)
(72) Inventor: YAMASHITA, Nobuyuki, Higashimatsuyama-Shi Saitama 355-8602 (JP)
(74) Representative: Dreiss
(86) International application number: PCT/JP2008/056730
(87) International publication number: WO 2008/123598

(57) **Abstract**

A vibration isolation mechanism for a coil spring, according to the invention, includes a spring retainer 24 that supports a return spring 20. The spring retainer 24 comprises a pedestal retainer 25 and a holding retainer 26. A seat winding portion 20a of the return spring 20 is elastically and firmly held between a holding portion 30a of the pedestal retainer 25 and holding portions 31a of the holding retainer 26. Accordingly, vibrations of the return spring 20 are forcedly damped, so that the generation of an abnormal noise caused by vibrations of the return spring 20 is suppressed even when a minute clearance is present between the seat winding portion 20a and a second turn portion of the return spring 20.

## Description

### Background Art

The present invention relates to a technical field of a vibration isolation mechanism for a coil spring, used in various devices, such as negative-pressure boosters, fluid-pressure boosters, etc., in which an input applied to input means is boosted by power to be output, and more particularly, to a technical field of a vibration isolation mechanism for a coil spring, capable of suppressing an abnormal noise generated by vibrations in a mounted state, and a booster using the same.

In a brake system for automobiles, a fluid-pressure booster, in which a fluid pressure boosts a pedal treading force to generate a large output force, is frequently adopted in order to enable obtaining a large braking force even with a small pedal treading force. As one of such fluid-pressure boosters, there is well known a negative-pressure booster, in which a negative pressure as power boosts a pedal treading force to obtain a large output force.

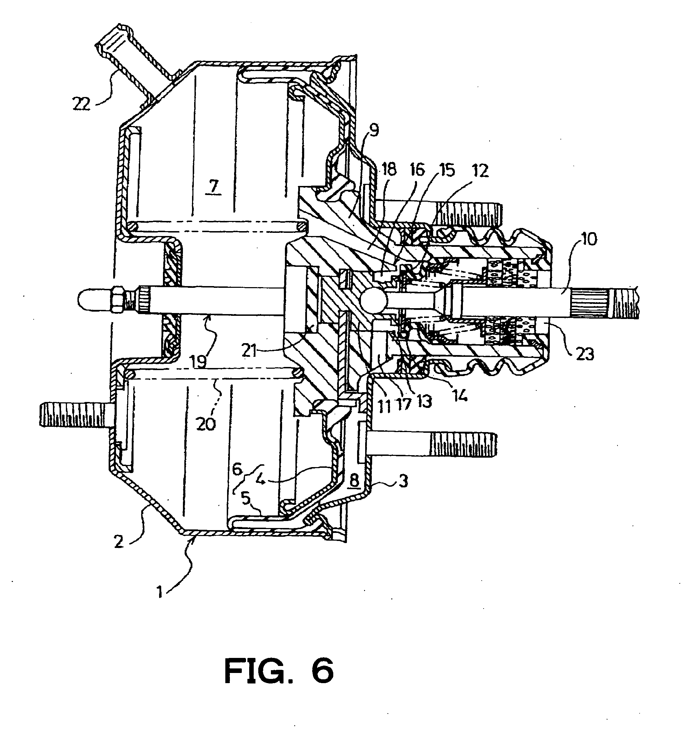

Fig. 6 is a cross sectional view showing such conventional, general negative-pressure booster. In the figure, the reference numeral 1 denotes a negative-pressure booster, 2 a front shell, 3 a rear shell, 4 a power piston member, 5 a diaphragm, 6 a power piston, 7 a constant-pressure chamber maintained at a negative pressure, 8 a variable pressure chamber, into which the atmosphere is introduced in operation, 9 a valve body, 10 an input shaft, 11 a valve plunger, 12 a atmosphere valve seat provided on the valve plunger 11, 13 a negative-pressure valve seat provided on the valve body 9, 14 a control-valve body, 15 a control valve, 16, 17, 18 passage holes, 19 an output shaft, 20 a return spring that biases the power piston 6 toward a non-operation position at all times, 21 a reaction disk, 22 a negative-pressure introducing pipe, and 23 an atmosphere inlet port.

In the negative-pressure booster 1, a negative pressure is introduced through the negative-pressure introducing pipe 22 into the constant-pressure chamber 7 at all times. In a state, in which the negative-pressure booster 1 is not operated, the atmosphere valve seat 12 of the control valve 15 abuts against the control-valve body 14 and the control-valve body 14 is slightly separated from the negative-pressure valve seat 13, so that the control valve 15 is put in a non-operating state. Accordingly, the variable pressure chamber 8 is cut off from the atmosphere and communicated to the constant-pressure chamber 7 through a clearance between the passage holes 17, 16 and the control-valve body 14 and the negative-pressure valve seat 13, and through the passage hole 18, and so a negative pressure is introduced into the variable pressure chamber 8.

When a brake pedal (not shown) is trodden from such non-operating state, the input shaft 10 makes a stroke forward (leftward in Fig. 6), the control-valve body 14 is seated on the negative-pressure valve seat 13, and then the atmosphere valve seat 12 separates from the control-valve body 14. That is, the control valve 15 is switched over. Thereby, the variable pressure chamber 8 is cut off from the constant-pressure chamber 7 and communicated to the atmosphere. Then, the atmosphere is introduced into the variable pressure chamber 8 through a clearance between the control-valve body 14 and the atmosphere valve seat 12 and through the passage holes 16, 17. Thereby, a differential pressure is generated between the variable pressure chamber 8 and the constant-pressure chamber 7, so that the power piston 6 comprising the power piston member 4 and the diaphragm 5 advances (moves leftward) to generate an output. The output is transmitted to a brake master cylinder (not shown) through the valve body 9, the reaction disk 21, and the output shaft 19. Then, the brake master cylinder is actuated to generate a braking pressure.

Since a reaction force produced by the braking pressure of the brake master cylinder causes the output shaft 19 to push the reaction disk 21, the reaction disk 21 is pressingly interposed between the valve body 9 and the output shaft 19 to be elastically deformed to abut against the valve plunger 11. Then, a force produced by the elastic deformation of the reaction disk 21 is transmitted as a reaction force to a brake pedal through the valve plunger 11 and the input shaft 10.

As the variable pressure chamber 8 is increased in pressure, an output of the power piston 6 is increased to cause the valve body 9 to advance further, so that the control-valve body 14 abuts against the atmosphere valve seat 12 while maintaining a state of being seated on the negative-pressure valve seat 13. Thereby, the atmosphere is not further introduced into the variable pressure chamber 8 and so a pressure in the variable pressure chamber 8 becomes one corresponding to an input (a force related to a pedal treading force) applied to the input shaft 10. An output of of the power piston 6 at this time becomes a large output obtained by boosting the pedal treading force, with the result that a master cylinder generates a braking pressure corresponding to an input of the input shaft 10. A brake is actuated by the braking pressure of the master cylinder. A braking force at this time becomes one obtained by boosting the pedal treading force.

When the brake pedal is released, both the input shaft 10 and the valve plunger 11 retreat and the control-valve body 14 is unseated from the negative-pressure valve seat 13. Then, the variable pressure chamber 8 is communicated to the constant-pressure chamber 7 and the atmosphere introduced into the variable pressure chamber 8 is discharged from the negative-pressure introducing pipe 22 through the passage holes 17, 16, a clearance between the control-valve body 14 and the negative-pressure valve seat 13, the passage hole 18, and the constant-pressure chamber 7. Thereby, the variable pressure chamber 8 is decreased in pressure and a spring force of the return spring 20 causes all the valve body 9, the power piston 6, and the output shaft 19 to retreat to come to a non-operating position and the control valve 15 is put in a non-operating state shown in the figure. Thus, with the negative-pressure booster 1, a large output can be obtained by a small pedal treading force.

By the way, a coil spring is generally used for the return spring 20 of the negative-pressure booster 1. The coil spring is normally formed from a spring wire material to comprise seat winding portions (portions of a first turn) wound substantially one turn at both ends in a plane perpendicular to a length direction of the coil spring and a coil portion wound spirally and continuously between the seat winding portions. Ordinarily, with a coil spring of this kind, minute clearances are produced between portions of the seat winding portions and portions of second turn portions.

In this manner, when minute clearances are produced between portions of the seat winding portions and portions of second turn portions, a spring property of the return spring 20 vibrates the power piston 6 when the negative-pressure booster 1 operates with the brake pedal being trodden to cause the power piston 6 to advance. Since vibrations of the power piston 6 are transmitted to the brake pedal through the reaction disk 21, the valve plunger 11, and the input shaft 10, there is caused a problem that a pedal feeling is deteriorated. Also, the coil spring vibrates due to vibrations of the power piston 6, and when the coil spring vibrates, there is caused a problem that an abnormal noise generates since portions of the seat winding portions and portions of second turn portions, which are separated from each other with minute clearances therebetween, contact with each other.

Hereupon, for example, JP-A-2006-341790 and JP-A-2006-77904 propose boosters, in which portions in predetermined ranges of second turns of a coil spring are brought into close contact with seat winding portions to prevent an abnormal noise from being generated upon contact and separation between portions of the second turns and portions of the seat winding portions even when the coil spring vibrates.

In that structure, in which portions in predetermined ranges of second turns of a coil spring are brought into close contact with seat winding portions as described above, however, it is difficult to surely damp vibrations of the coil spring. Besides, in order to effectively prevent the generation of an abnormal noise due to vibrations of the coil spring, it is necessary to accurately and strictly control an extent of close contact between portions of the second turns and the seat winding portions and dimensions of closely contacted regions, or the like. Therefore, there is caused a problem that a vibration isolation mechanism for a coil spring is not so much favorable in productivity and high in cost.

### Disclosure of the Invention

It is an object of the invention to provide a vibration isolation mechanism for a coil spring, which can be improved in productivity while damping vibrations of the coil spring to suppress the generation of an abnormal noise, and a booster using the same.
Also, it is a further of the invention to provide a booster that damps vibrations caused by a coil spring, which constitutes a return spring of a power piston, to enable making an operating feeling favorable.

In order to attain the object, a vibration isolation mechanism for a coil spring, according to the invention, includes a coil spring having seat winding portions at both ends and a coil portion provided continuously between the seat winding portions, and a spring retainer supporting one of the seat winding portions, the spring retainer including a pair of holding portions, which hold one of the seat winding portions.

Also, the vibration isolation mechanism for a coil spring, according to the invention, has a feature in that one holding portion of the pair of holding portions holds at least an outer peripheral side of the seat winding portion of the coil spring and the other holding portion holds at least an inner peripheral side of the seat winding portion of the coil spring.

Further, the vibration isolation mechanism for a coil spring, according to the invention, has a feature in that an opposite surface of the spring retainer to a surface thereof toward the coil spring is supported on a spring retainer supporting member both in an axial direction and in a radial direction.

Further, the vibration isolation mechanism for a coil spring, according to the invention, has a feature in that the spring retainer includes a first retainer and a second retainer, one holding portion of the pair of holding portions is provided on the first retainer, and the other holding portion of the pair of holding portions is provided on the second retainer.

Further, the vibration isolation mechanism for a coil spring, according to the invention, has a feature in that one holding portion of the first retainer holds at least an outer peripheral side of the seat winding portion of the coil spring and the other holding portion of the second retainer holds at least an inner peripheral side of the seat winding portion of the coil spring.
Further, the vibration isolation mechanism for a coil spring, according to the invention, has a feature in that the other holding portions are provided at equal intervals in a predetermined number of locations in a circumferential direction.

Further, the vibration isolation mechanism for a coil spring, according to the invention, has a feature in that openings being the same in number as the other holding portions are formed at equal intervals on the first retainer in a circumferential direction and the other holding portions extend through the corresponding openings from an opposite side to the coil spring.

Further, the vibration isolation mechanism for a coil spring, according to the invention, has a feature in that the second retainer is supported on a spring retainer supporting member both in an axial direction and in a radial direction and the first retainer is supported on the spring retainer supporting member in a radial direction.

On the other hand, the booster according to the invention includes at least a power piston actuated by the action of power corresponding to an input to boost the input to output the same, and a return spring that biases the power piston toward a position of non-operation, the booster being characterized by including that vibration isolation mechanism for a coil spring, which prevents vibrations of the coil spring, the vibration isolation mechanism for a coil spring being the coil spring according to any one of claims 1 to 8.

With the vibration isolation mechanism of the invention for a coil spring thus structured in this manner, the pair of holding portions provided on the spring retainer hold the seat winding portion of the coil spring, so that even when the coil spring vibrates, vibrations thereof can be forcedly damped. Accordingly, even when a minute clearance is produced between the seat winding portion and a second turn portion of the coil spring, it is possible to effectively suppress the generation of an abnormal noise.

Also, it does not matter whether a minute clearance is produced between the seat winding portion and a second turn portion of the coil spring, it gets along without accurately and strictly controlling an extent of close contact between the second turn portion and the seat winding portion and dimensions of closely contacted regions, or the like, so that a vibration isolation mechanism for a coil spring can be improved in productivity and decreased in cost.

On the other hand, with the booster according to the invention, a return spring of a power piston includes a coil spring and vibrations caused by the coil spring in operation are damped to enable suppressing the generation of an abnormal noise, so that it is possible to make an operating feeling of the booster favorable and to decrease the booster in cost.

### Brief Description of the Drawings

Fig. 1 is a cross sectional view partially showing a negative-pressure booster, to which an example of an embodiment of a vibration isolation mechanism for a coil spring, according to the invention, is applied.
Fig. 2 shows a pedestal retainer, which constitutes a spring retainer shown in Fig. 1, Fig. 2 (a) being a front view, and Fig. 2 (b) being a cross sectional view taken along the line II-II in Fig. 2(a).
Fig. 3 shows a holding retainer, which constitutes the spring retainer shown in Fig. 1, Fig. 3 (a) being a front view, and Fig. 3 (b) being a cross sectional view taken along the line III-III in Fig. 3(a).
Fig. 4 is a cross sectional view partially showing a negative-pressure booster, to which a further example of an embodiment of a vibration isolation mechanism for a coil spring, according to the invention, is applied.
Fig. 5 shows a pedestal retainer being a spring retainer shown in Fig. 4, Fig. 5(a) being a front view, and Fig. 5(b) being a cross sectional view taken along the line V-V in Fig. 5(a).
Fig. 6 is a cross sectional view showing an example of a conventional negative-pressure booster.

### Best Mode for Carrying Out the Invention

A best mode for carrying out the invention will be described with reference to the drawings.

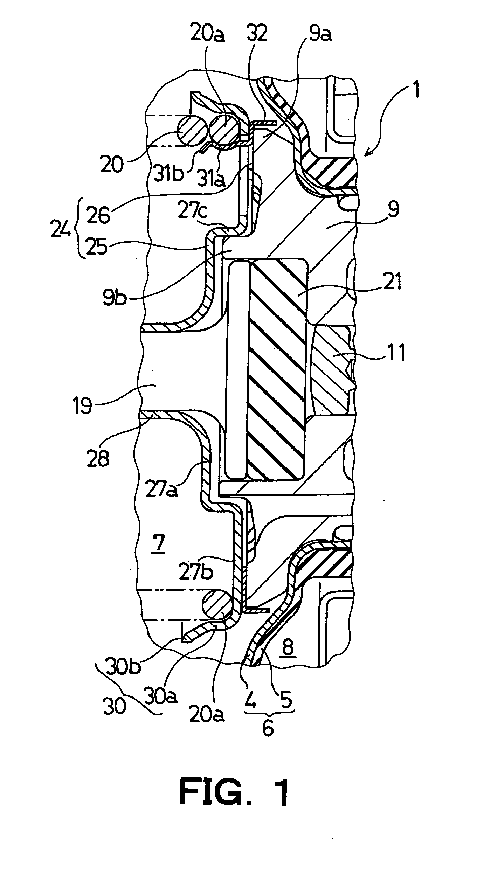

Fig. 1 is a cross sectional view partially showing a negative-pressure booster, to which an example of an embodiment of a vibration isolation mechanism for a coil spring, according to the invention, is applied. In addition, in the following descriptions, the same constituents as those in an example or examples preceding an associated example and a conventional example shown in Fig. 6 are denoted by the same reference numerals as those in the latter, and so a detailed explanation therefor is omitted.

A booster, to which a vibration isolation mechanism for a coil spring, according to the example, is applied, is a negative-pressure booster 1 used in a brake booster, etc. The negative-pressure booster 1 is different only in a partial construction from the conventional negative-pressure booster 1 shown in Fig. 6 but the same in a major construction as the conventional negative-pressure booster 1. Accordingly, an explanation will be given only to the construction of that part of the negative-pressure booster 1 of this example, which is different from the conventional negative-pressure booster 1.

As shown in Fig. 1, with the negative-pressure booster 1 of this example, an end of a return spring 20, which includes a coil spring, toward a valve body 9 is supported on the valve body 9 with a spring retainer 24 therebetween. The spring retainer 24 includes a pedestal retainer 25 (corresponding to a first retainer in the invention), which directly supports the end of the return spring 20 in a fore and aft direction (a left and right direction in Fig. 1), and a holding retainer 26 (corresponding to a second retainer in the invention), which elastically holds a seat winding portion 20a being a first turn of the return spring 20.

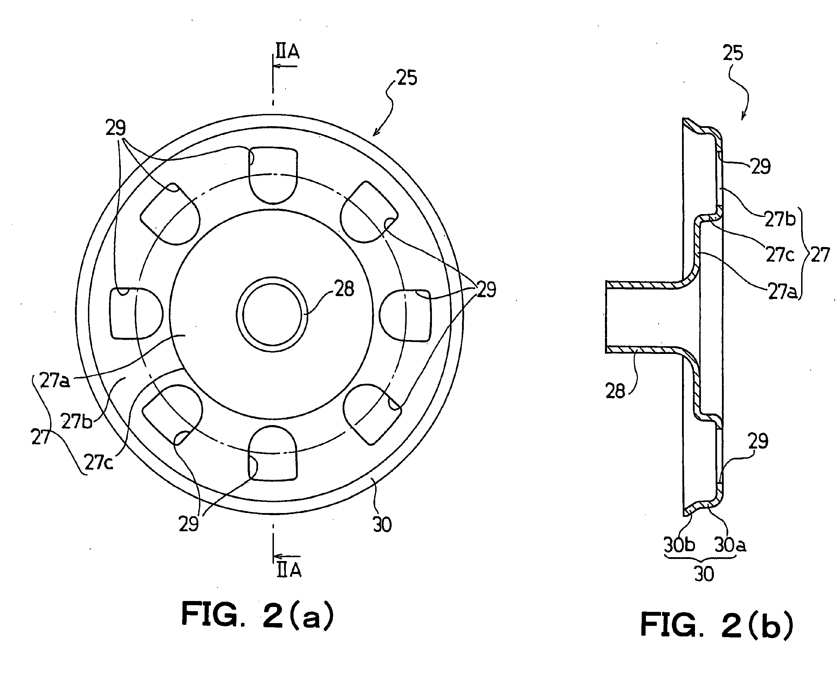

As shown in Figs. 2(a) and 2(b), the pedestal retainer 25 is substantially the same in structure as the spring retainer used in the conventional and general negative-pressure booster 1. That is, the pedestal retainer 25 includes a stepped, annular disk portion 27 having an annulus step 27c so that a flat, center portion 27a is positioned forwardly (leftward in Fig. 2(b)) of a flat, outer peripheral portion 27b disposed therearound, and a cylindrical-shaped guide support 28, which is concentric with the center portion 27a of the stepped, annular disk portion 27 to project forward.

A predetermined number (eight in the example as shown) of openings 29 are formed circumferentially at equal intervals on the outer peripheral portion 27b of the stepped, annular disk portion 27. Also, an annulus flange 30 projecting forward is formed on an outer peripheral edge of the outer peripheral portion 27b. The flange 30 includes an annulus holding portion 30a, which holds an outer peripheral side of the seat winding portion 20a of the return spring 20, and an annular guide portion 30b, which is in the form of a frustum to project divergingly forwardly of the holding portion 30a.
As shown in Fig. 1, the guide support 28 is fitted onto an output shaft 19 to radially position the spring retainer 24 so as to make the same concentric with the output shaft 19.

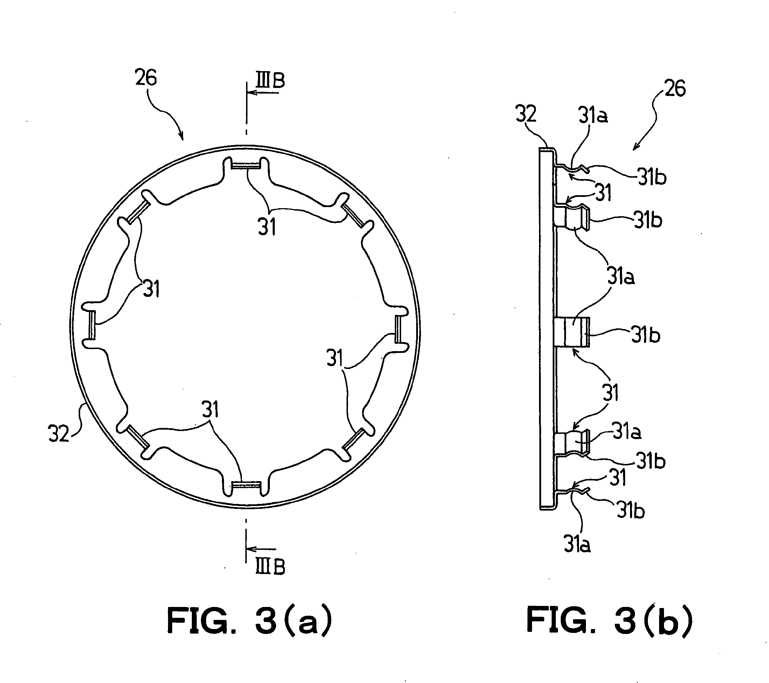

As shown in Figs. 3(a) and 3(b), the holding retainer 26 is formed to assume the shape of an annulus and holding pawls 31 being the same in number as the openings 29 of the stepped, annular disk portion 27 are provided protrusively at an inner peripheral edge of the holding retainer 26 to be spaced equally forward in an axial direction and in a circumferential direction. Provided on the holding pawls 31, respectively, are a holding portion 31a composed of a curved recess, which elastically holds an inner peripheral side of the seat winding portion 20a of the return spring 20, and an annular guide portion 31b, which is in the form of a frustum to project divergingly forwardly of the holding portion 31a. The respective holding pawls 31, respectively, can extend through corresponding openings 29 of the stepped, annular disk portion 27. Also, an annulus flange 32 is provided protrusively rearward (leftward in Fig. 3(b)) at an outer peripheral edge of the holding retainer 26.

As shown in Fig. 1, the spring retainer 24 is formed by having the holding pawls 31 of the holding retainer 26, respectively, extending through the respective openings 29 of the pedestal retainer 25 from the rear (an opposite side to the flange 30 of the pedestal retainer 25, that is, an opposite side to the return spring 20) and integrally assembling the holding retainer 26 to the pedestal retainer 25.

The annulus flange 32 of the holding retainer 26 is fitted onto an outer periphery of a large-diameter forward end 9a of the valve body 9 and the annulus step 27c of the pedestal retainer 25 is fitted onto a small-diameter forward end 9b of the valve body 9, whereby the spring retainer 24 is assembled to the valve body 9.

In this manner, in a state, in which the spring retainer 24 is assembled to the valve body 9, an annulus holding space is formed between the holding portion 30a of the flange 30 and the holding portions 31a of the holding pawls 31. Then, an end of the return spring 20 toward the valve body 9 is fitted between the guide portion 30b of the flange 30 and the guide portions 31b of the holding portions 31a of the holding pawls 31 rearward in an axial direction from the front. Then, the holding pawls 31 are elastically spread, so that the seat winding portion 20a of the return spring 20 enters into the holding space between the holding portion 30a and the holding portions 31a as shown in Fig. 1. In this state, since the holding pawls 31 are elastically restored, the seat winding portion 20a of the return spring 20 is elastically and firmly held between the holding portion 30a and the holding portions 31a.

Thereby, even when the power piston 6 vibrates, vibrations of the return spring 20 are forcedly damped, so that the generation of an abnormal noise is effectively suppressed even when a minute clearance is generated between the seat winding portion and the second turn portion of the return spring 20. In this manner, the vibration isolation mechanism for a coil spring, according to the invention, includes the holding portion 30a of the pedestal retainer 25 and the holding portions 31a of the holding retainer 26.

Also, an inner peripheral surface of the annulus step 27c of the pedestal retainer 25 is supported radially on an outer periphery of the small-diameter forward end 9b of the valve body 9 and an opposite surface of the pedestal retainer 25 to the return spring 20 is supported on a surface of the holding retainer 26 toward the return spring 20 in an axial direction of the return spring 2, so that the pedestal retainer 25 is positioned radially and axially relative to the valve body 9 (In addition, the pedestal retainer 25 is positioned axially through the holding retainer 26). Accordingly, the valve body 9 constitutes a spring retainer supporting member of the invention.

Further, an inner peripheral surface of the annulus flange 32 of the holding retainer 26 is supported radially on an outer periphery of the large-diameter forward end 9a and an opposite surface of the holding retainer 26 to a surface of the return spring 20 is supported on the valve body 9 in axial directions of the return spring 2 and the valve body 9, so that positioning is accomplished both in a radial direction and in an axial direction.

With the vibration isolation mechanism, according to the example, for the return spring 20, the seat winding portion 20a of a coil spring, which constitutes the return spring 20, is held between the holding portion 30a of the pedestal retainer 25 and the holding portions 31a of the holding retainer 26, so that even when the power piston 6 vibrates, it is possible to forcedly damp vibrations of the return spring 20. Accordingly, even when a minute clearance is generated between the seat winding portion and the second turn portion of the return spring 20, it is possible to effectively suppress the generation of an abnormal noise caused by vibrations of the return spring 20.

Also, since it does not matter whether a minute clearance is generated between the seat winding portion and the second turn portion of the return spring 20, it gets along without accurately and strictly controlling an extent of close contact between the second turn portion and the seat winding portion and dimensions of closely contacted regions, or the like, so that the vibration isolation mechanism for the return spring 20 can be improved in productivity and decreased in cost.

Further, with the negative-pressure booster 1 provided with the vibration isolation mechanism of the example for the return spring 20, the return spring 20 of the power piston 6 includes a coil spring and vibrations caused by the coil spring in operation are damped to enable suppressing the generation of an abnormal noise, so that it is possible to make an operating feeling of the negative-pressure booster 1 favorable and to decrease the negative-pressure booster 1 in cost.
Other constitution, functions, and effects of the negative-pressure booster 1 according to the example are the same as those in the conventional negative-pressure booster 1 shown in Fig. 6.

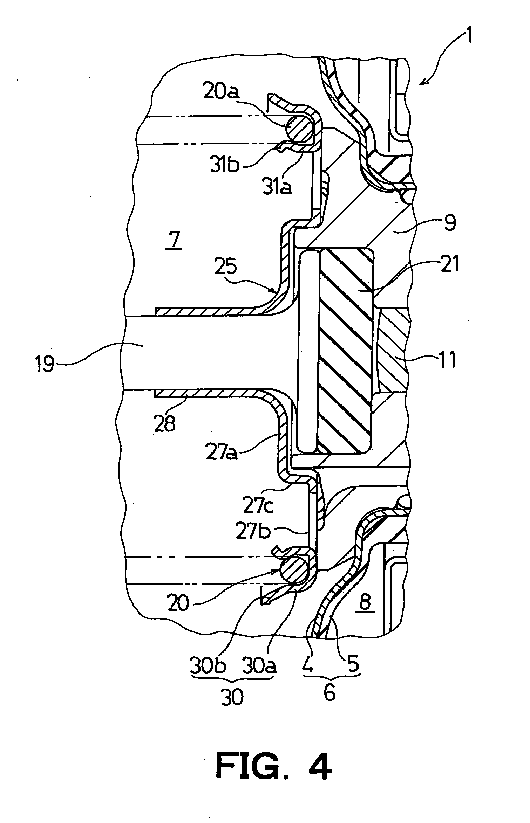

Fig. 4 is a cross sectional view partially showing a negative-pressure booster, to which a further example of an embodiment of a vibration isolation mechanism for a coil spring, according to the invention, is applied.
While the spring retainer 24 in the example described above includes two members, that is, the pedestal retainer 25 and the holding retainer 26, with a vibration isolation mechanism, according to the present example, for a coil spring, a spring retainer 24 includes a single member, that is, a pedestal retainer 25.

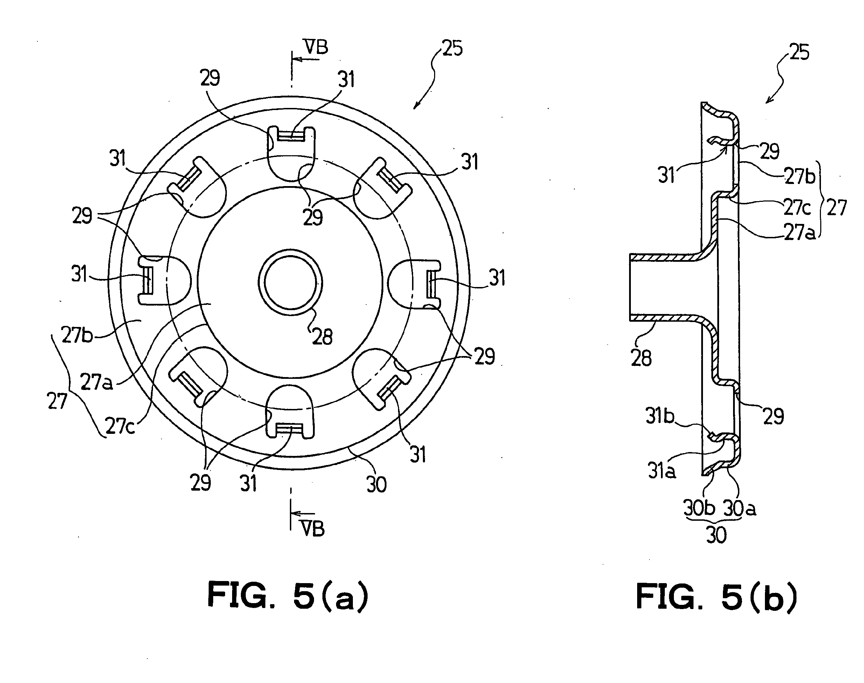

As shown in Figs. 5(a) and 5(b), the pedestal retainer 25 is almost the same in structure as the pedestal retainer 25 shown in Figs. 2(a) and 2(b), but the pedestal retainer 25 is partially different from the pedestal retainer 25 of the example described above. That is, a predetermined number (eight in the example as shown) of openings 29 formed on the pedestal retainer 25 are provided with holding pawls 31, which are the same in number as the openings 29. All the holding pawls 31 are quite the same in structure as the holding retainer 26 shown in Figs. 3(a) and 3(b). That is, the holding pawls 31 include a holding portion 31a composed of a curved recess, which elastically holds a seat winding portion 20a of a return spring 20, and an annular guide portion 31b, which is in the form of a frustum to project divergingly forwardly of the holding portion 31a.

With the vibration isolation mechanism of the example for a coil spring, thus structured in this manner, the pedestal retainer 25 is assembled to a valve body 9 and an output shaft 19 of the negative-pressure booster 1 in the same manner as in the example described above. In the same manner as in the example described above, the seat winding portion 20a of the return spring 20 toward the valve body 9 is elastically and firmly held between a holding portion 30a and the holding portions 31a.

With the vibration isolation mechanism of the example for a coil spring, the spring retainer 24 is composed of only a single member, that is, the pedestal retainer 25, so that it is possible to reduce parts in number to achieve a decrease in cost and to assemble the spring retainer 24 simply.
Other constitution, functions, and effects of the negative-pressure booster 1 provided with the vibration isolation mechanism of the example for a coil spring are the same as those in the negative-pressure booster 1 of the example described above and in the conventional negative-pressure booster 1 shown in Fig. 6.

### Industrial Applicability

The vibration isolation mechanism, according to the invention, for a coil spring can be preferably made use of for a vibration isolation mechanism for a coil spring, which is mounted in a state of being applied by a preset compressive set load and on which an externally operating force is exerted.
Also, the booster according to the invention can be preferably made use of for a booster system and a booster, in which an operating force of an operator is boosted to be used, as well as for a booster of a brake system.

## Claims

1. A vibration isolation mechanism for a coil spring, comprising:
a coil spring including seat winding portions at both ends and a coil portion provided continuously between the seat winding portions; and
a spring retainer supporting one of the seat winding portions,
wherein the spring retainer includes a pair of holding portions, which hold one of the seat winding portions.

2. The vibration isolation mechanism for a coil spring according to claim 1, wherein one of the pair of holding portions holds at least an outer peripheral side of the seat winding portion of the coil spring, and the other holding portion holds at least an inner peripheral side of the seat winding portion of the coil spring.

3. The vibration isolation mechanism for a coil spring, according to claim 1 or 2, wherein an opposite surface of the spring retainer to a surface thereof toward the coil spring is supported on a spring retainer supporting member in both of an axial direction and a radial direction.

4. The vibration isolation mechanism for a coil spring, according to claim 1, wherein the spring retainer comprises a first retainer and a second retainer, one of the pair of holding portions is provided on the first retainer, and the other holding portion of the pair of holding portions is provided on the second retainer.

5. The vibration isolation mechanism for a coil spring, according to claim 4, wherein one holding portion of the first retainer holds at least an outer peripheral side of the seat winding portion of the coil spring and the other holding portion of the second retainer holds at least an inner peripheral side of the seat winding portion of the coil spring.

6. The vibration isolation mechanism for a coil spring, according to claim 4 or 5, wherein the other holding portions are provided at equal intervals in a predetermined number of locations in a circumferential direction.

7. The vibration isolation mechanism for a coil spring, according to claim 6, wherein openings being the same in number as the other holding portions are formed at equal intervals on the first retainer in a circumferential direction and the other holding portions extend through the corresponding openings from an opposite side to the coil spring.

8. The vibration isolation mechanism for a coil spring, according to any one of claims 4 to 7, wherein the second retainer is supported on a spring retainer supporting member both in an axial direction and in a radial direction and the first retainer is supported on the spring retainer supporting member in a radial direction.

9. A booster comprising:
at least a power piston actuated by the action of power corresponding to an input to boost and output the input; and a return spring that biases the power piston toward a position of non-operation,
wherein the booster comprises a vibration isolation mechanism for a coil spring, which prevents vibrations of the coil spring, the vibration isolation mechanism for a coil spring is the coil spring according to any one of claims 1 to 8.
